# FASCICULE DE BREVET EUROPEEN

(11) **EP 3 675 430 B1**
(45) Date de publication et mention de la délivrance du brevet: **29.06.2022**
(21) Numéro de dépôt: 19219724.2
(22) Date de dépôt: 26.12.2019
(51) Int. Cl.: H04L 67/12, H04L 69/18, H04L 69/22, H04L 12/40, H04L 43/026, H04L 47/10, H04L 47/2483, H04L 47/80, H04L 49/60

(54) **SYSTÈME DE COMMUNICATION AVIONIQUE MIXTE DE TYPES ARINC 664 P7 ET ETHERNET À ROUTAGE PRÉDÉTERMINÉ**
GEMISCHTES FLUGZEUGSKOMMUNIKATIONSSYSTEM VOM TYP ARINC 664 P7 UND TYP ETHERNET MIT VORHERBESTIMMTER WEGLENKUNG
MIXED AVIONIC COMMUNICATION SYSTEM OF TYPES ARINC 664 P7 AND ETHERNET WITH PREDETERMINED ROUTING

(30) Priorité: 26.12.2018 FR 1874166
(43) Date de publication de la demande: 01.07.2020
(73) Titulaire: Thales, 92400 Courbevoie (FR)
(72) Inventeur: FITTERER, Eric, 33700 MERIGNAC (FR); MONNIER, Stéphane, 33700 MERIGNAC (FR); SITBON, Arnaud, 33700 MERIGNAC (FR); FINAZ, Yves, 33700 MERIGNAC (FR); LALOIRE, Frédéric, 33700 MERIGNAC (FR)
(74) Mandataire: Lavoix

(56) Documents cités:
- EP-A1- 2 139 172
- EP-A1- 2 536 070
- EP-A1- 3 057 273
- EP-A1- 3 076 605
- EP-A1- 3 316 533
- FR-A1- 2 905 047
- US-A1- 2014 226 522
- US-A1- 2015 103 825
- ANONYMOUS: "Time-Triggered Ethernet", SAE REAFFIRMED STANDARD AS6802, SAE, US , 9 novembre 2016 (2016-11-09), pages 1-108, XP009514461, Extrait de l'Internet: URL:https://saemobilus.sae.org/content/as6 802 [extrait le 2019-07-11]

## Description

La présente invention concerne un système de communication avionique mixte de types ARINC 664 P7 et Ethernet à routage prédéterminé.

De manière connue en soi, la norme ARINC 664 permet de mettre en œuvre des réseaux informatiques avioniques. Basée sur le standard Ethernet, elle permet en particulier d'adapter l'utilisation de ce standard au contexte avionique et notamment, aux contraintes avioniques.

La norme ARINC 664 est composée de plusieurs parties, chaque partie étant utilisable en fonction de contraintes imposées aux données transitant via le réseau avionique mis en œuvre selon cette norme.

Parmi ces parties, on connait notamment la partie référencée par « P7 » et dénotée généralement par « ARINC 664 P7 » ou « ARINC 664 Part 7 » ou encore « AFDX ^{®} ».

Cette partie P7 est utilisable pour transmettre des données avioniques entre différents systèmes avioniques mettant en œuvre des fonctions essentielles de l'avion et présente ainsi le plus grand nombre de contraintes.

Ainsi, un réseau avionique mis en œuvre selon la partie P7 présente un réseau ségrégué, redondant et déterministe. Le déterminisme de ce réseau signifie en particulier que chaque trame émise atteint sa destination en un temps maximal connu.

Dans certains réseaux avioniques, il est également possible d'utiliser le protocole Ethernet (au sens de la norme IEEE 802.3-2000 et versions ultérieures) combiné avec un certain nombre de restrictions additionnelles imposées par la nature du réseau correspondant.

En comparaison avec la partie P7 de la norme ARINC 664, le protocole Ethernet avec des restrictions présente moins de contraintes et est ainsi utilisable pour mettre en œuvre des réseaux avioniques transmettant des données moins sensibles et/ou moins critiques.

Ces données présentent généralement des données de maintenance, de téléchargement et des fonctions de service pour l'équipage relatives à différents systèmes avioniques. Ainsi, en cas de perte de ces données, elles peuvent être retransmises de nouveau sans créer de risque considérable pour la sécurité de l'avion.

Les restrictions additionnelles imposées sur le protocole Ethernet peuvent notamment concerner la manière de routage des trames. Ainsi, par exemple, ce routage peut être prédéterminé au sein de chaque commutateur du réseau, en fonction de l'identifiant de la trame.

Cela est par exemple le cas de la partie référencée par « P3 » de la norme ARINC 664 qui est basée également sur le protocole Ethernet mais qui présente moins de contraintes en comparaison avec la partie P7 et recommande cependant un usage de réseau configuré statiquement pour un mode opérationnel sur l'avion.

Dans un avion, les réseaux de type ARINC 664 P7 et de type Ethernet (éventuellement avec restrictions additionnelles) sont ségrégués l'un de l'autre. Cette ségrégation est obtenue en utilisant des moyens physiques différents pour mettre en œuvre ces réseaux.

Cela signifie en particulier que, pour assurer une telle ségrégation, ces réseaux utilisent des commutateurs et des moyens de transmission physiquement différents.

On conçoit alors que ce type de ségrégation implique au moins un doublement de chaque composante physique mettant en œuvre ces réseaux. Cela implique alors de nombreux problèmes en termes d'encombrement et de poids dans une structure accueillant ces réseaux telle qu'un avion.

Dans l'état de la technique, on connait déjà quelques exemples de réseaux dits mixtes, c'est-à-dire des réseaux à la fois de type ARINC 664 P7 et de type Ethernet.

Ainsi, selon un exemple connu, cette mixabilité est atteinte par l'introduction d'une passerelle spécifique entre les réseaux des deux types permettant de transmettre des trames entre ces réseaux. Toutefois, cette solution ne diminue pas le nombre de composantes physiques utilisées et ne répond donc pas aux problèmes d'encombrement et de poids cités précédemment.

Selon un autre exemple connu, une mixabilité ARINC 664 P7 et Ethernet à routage prédéterminé est atteinte en utilisant des commutateurs communs à ces deux types de réseaux mais comportant des ports dédiés à chacun de ces types. Même si cette solution permet de diminuer le nombre des commutateurs utilisés, elle ne permet pas de résoudre complétement les problèmes d'encombrement et de poids car des moyens de transmission différents doivent toujours être utilisés. De plus, cette solution multiple le nombre de ports au sein d'un même commutateur ce qui rend sa structure particulièrement complexe.

On connait également d'autres exemples de réseaux mixtes décrits par exemple dans le document EP 3 076 605 A1.

La présente invention a pour but de proposer un système de communication mixte ARINC 664 P7 et Ethernet permettant d'utiliser les mêmes commutateurs et les mêmes moyens de transmission pour ces types de réseaux, et de résoudre donc plus efficacement les problèmes d'encombrement et de poids précités. Autrement dit, la présente invention a pour but de proposer un système de communication mixte permettant d'utiliser pour les réseaux précités les mêmes couches physiques comprenant donc les commutateurs, le câblage et les ports des émetteurs/récepteurs communs.

À cet effet, l'invention a pour objet un système de communication avionique conforme à la revendication 1.

Suivant d'autres aspects avantageux de l'invention, le système comprend une ou plusieurs des caractéristiques des revendications 2 à 14.

Ces caractéristiques et avantages de l'invention apparaitront à la lecture de la description qui va suivre, donnée uniquement à titre d'exemple non limitatif, et faite en référence aux dessins annexés, sur lesquels :
[Fig 1] la figure 1 est une vue schématique d'un aéronef comportant un réseau avionique de type ARINC 664 P7 et un réseau avionique de type Ethernet à routage prédéterminé ;
[Fig 2] la figure 2 est une vue schématique d'un système de communication selon l'invention, le système de communication mettant en œuvre les réseaux avioniques de la figure 1 ; et
[Fig 3] la figure 3 est une vue schématique de trames transmises par le système de communication de la figure 2, selon un exemple particulier de réalisation de ce système.

Dans tout ce qui suit, toute mention d'une norme, notamment d'une norme informatique, fait référence à des principes généraux de cette norme qui sont bien connus de l'homme du métier et qui sont indépendants de différentes versions de cette norme, sauf mention explicite.

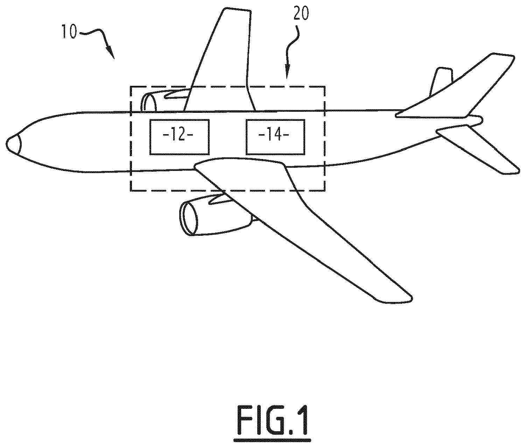

La figure 1 illustre un aéronef 10 tel qu'un avion.

L'aéronef 10 comprend un réseau avionique 12 de type ARINC 664 P7 un réseau avionique 14 de type Ethernet à routage prédéterminé.

Le réseau avionique 12 permet de transmettre des données sensibles entre différents systèmes avioniques. Par donnée sensible, on comprend notamment toute donnée dont la perte ou un délai en transmission peut avoir une influence sur la sécurité de l'aéronef 10.

Le réseau avionique 14 permet de transmettre des données moins sensibles en comparaison avec le réseau avionique 12. Ainsi, par exemple, ces données correspondent à des données de maintenance échangées entre l'aéronef 10 et le sol.

Selon l'invention, les réseaux avioniques 12 et 14 sont mis en œuvre par un même système physique de communication avionique 20.

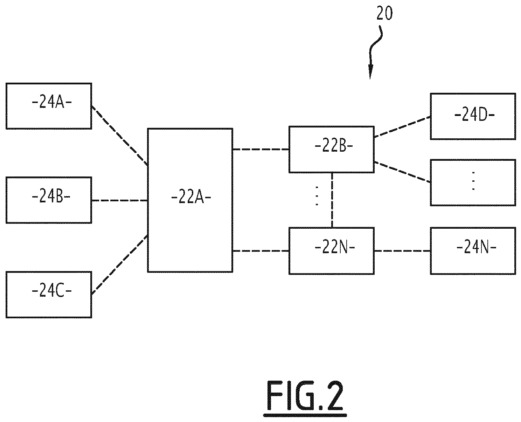

Un exemple d'un tel système de communication avionique 20 est illustré sur la figure 2.

Ainsi, en référence à cette figure, ce système de communication 20 comprend une pluralité de commutateurs 22A,...,22N et une pluralité d'équipements 24A,...,24N.

Chaque équipement 24A,...,24N, connu également sous le terme anglais de « End System », est intégré dans un système avionique et assure la communication de ce système avec les réseaux 12, 14.

Ainsi, en fonction du système avionique dans lequel il est intégré, chaque équipement 24A,...,24N peut être émetteur et/ou récepteur de données numériques.

Chaque équipement 24A,...,24N est raccordé à au moins l'un des commutateurs 22A,...22N via des moyens de transmission et via au moins un port de ce commutateur. Les moyens de transmission présentent par exemple un câble à paire torsadée ou tout autre type de câble permettant une transmission bidirectionnelle de données.

Chaque commutateur 22A,...22N comprend ainsi une pluralité de ports d'entrée et de sortie, et une table de configuration. Chaque port d'entrée est apte à recevoir des données numériques entrantes pour les transmettre vers un ou plusieurs ports de sortie conformément à la table de configuration du commutateur correspondant, comme cela sera expliqué plus en détail par la suite.

Chaque table de configuration est déterminée à la phase de conception du système 20 et permet de cheminer et de contrôler les données numériques transitant par le commutateur correspondant, comme cela sera expliqué par la suite.

Les commutateurs 22A,...22N sont reliés entre eux par des moyens de transmission présentant également par exemple un câble à paire torsadée ou tout autre type de câble permettant une transmission bidirectionnelle de données.

Selon l'invention, les données numériques circulant dans le système de communication 20 se présentent sous la forme de trames de premier type et de trames de deuxième type.

Chaque trame de premier type est conforme au protocole de la norme ARINC 664 P7.

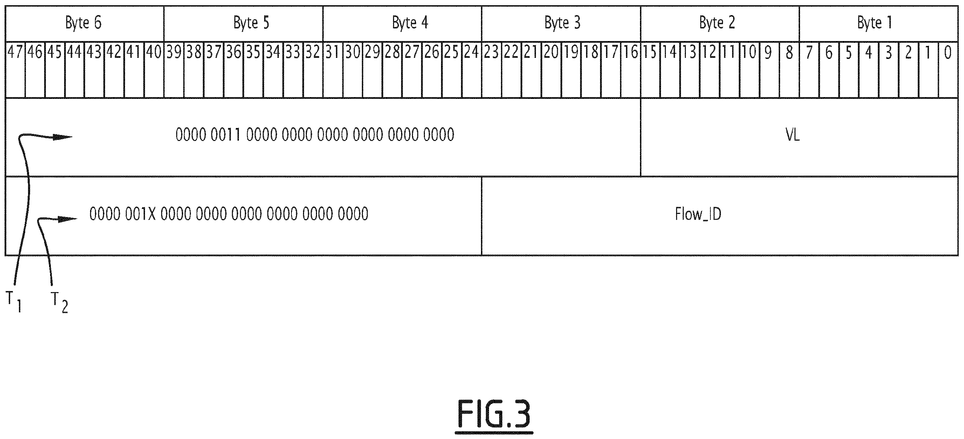

Chaque trame de premier type comprend un entête comportant notamment un champ dit « MAC DEST » qui est illustré schématiquement sur la figure 3 pour une trame T₁ de premier type.

Ainsi, comme cela est illustré sur cette figure, ce champ « MAC DEST » s'étend sur 6 octets.

Dans le cas de la trame T₁, comme cela est connu en soi, les octets 3 à 6 dénotés sur la figure 3 par les références Byte 3 à Byte 6 sont réservés à une valeur particulière, commune pour toutes les trames de type ARINC 664 P7. Cette valeur est égale à « 0000 0011 0000 0000 0000 0000 0000 0000 ».

Par ailleurs, comme cela est également connu en soi, les octets 1 et 2 de la trame T₁ dénotés sur la figure 3 par les références Byte 1 à Byte 2 correspondent à une valeur VL appelée « lien virtuel » (ou « Virtual Link » en anglais) et définissant le cheminement de la trame.

En outre, les trames de premier type comportant une même valeur VL forment un même flux de premier type. La valeur VL est mémorisée dans la table de configuration de chaque commutateur par lequel le flux correspondant à cette valeur VL transite et permet ainsi de cheminer chaque trame au sein de ce commutateur.

Au sens de la présente invention, la valeur VL de chaque trame de premier type est appelée identifiant de la trame correspondante.

Comme cela est connu en soi, chaque flux de type ARINC 664 P7 est émis par un équipement émetteur 24A,...,24N correspondant avec un cadencement minimal connu sous le terme anglais de « BAG » (pour « *Bandwidth Allocation Gap* »). Ce cadencement permet de définir notamment une bande passante autorisée pour le flux correspondant.

En outre, comme cela est connu en soi, un niveau de priorité est défini pour chaque trame de premier type selon la valeur VL de cette trame. Ce niveau de priorité est choisi par exemple parmi quatre niveaux possibles.

Chaque trame de deuxième type est conforme au protocole de la norme Ethernet (au sens de la norme IEEE 802.3-2000 et versions ultérieures) à routage prédéterminé.

Dans tout ce qui suit, par « routage prédéterminé », on entend un routage selon lequel chaque trame est cheminée par les commutateurs 22A,...,22N selon des règles prédéterminées.

Ces règles prédéterminées sont notamment mémorisées dans la table de configuration de chaque commutateur 22A,...,22N et définissent le cheminement de chaque trame de deuxième type au sein de ce commutateur.

Ainsi, par exemple, cela est le cas lorsque la table de configuration de chaque commutateur 22A,...,22N définit pour chaque trame un port d'entrée et un ou plusieurs ports de sortie, ou lorsque la table de configuration de chaque commutateur 22A,...,22N définit pour chaque trame un ou plusieurs ports de sortie.

Selon un exemple particulier de réalisation de l'invention, les trames de deuxième type sont conformes au protocole ARINC 664 P3.

Chaque trame de deuxième type comprend également un entête comportant des bits réservés par la norme IEEE 802.3.

Par ailleurs, lorsque les trames de deuxième type sont conformes au protocole ARINC 664 P3, cet entête comprend également un champ dit « MAC DEST » illustré sur la figure 3 pour une trame T₂ de deuxième type.

Selon l'invention, l'entête de chaque trame de deuxième type et en particulier ses octets 3 à 6, peuvent prendre toute valeur autre que les octets correspondants de l'entête des trames de premier type, c'est-à-dire toute valeur autre que la valeur « 0000 0011 0000 0000 0000 0000 0000 0000 ».

Cela permet alors de distinguer de manière sure les trames de premier type et les trames de deuxième type.

Par ailleurs, selon l'invention, l'entête de chaque trame de deuxième type définit une valeur Flow_ID appelée « identifiant de flux » (ou « Flow ID » en anglais). Cette valeur Flow_ID est définie hors les bits réservés par la norme IEEE 802.3 avec un usage local Ethernet.

Les trames de deuxième type comportant une même valeur Flow_ID forment un même flux de deuxième type. Cette valeur Flow_ID est mémorisée dans la table de configuration de chaque commutateur par lequel le flux correspondant à cette valeur Flow_ID transite. Cela permet à ce commutateur d'identifier chaque trame et de cheminer cette trame de façon prédéterminée, conformément à sa table de configuration.

Au sens de la présente invention, la valeur Flow_ID de chaque trame de deuxième type est appelée identifiant de la trame correspondante.

Comme cela est illustré sur la figure 3, pour une trame T₂ conforme au protocole ARINC 664 P3, la valeur Flow_ID peut être portée par exemple par les octets 1 à 3 du champ « MAC DEST ».

Enfin, pour chaque flux de deuxième type, un niveau de priorité est défini et exploité par chaque commutateur 22A,...,22N. Ce niveau de priorité est défini par exemple pour chaque trame à partir de la valeur Flow_ID de cette trame selon la table de configuration du commutateur 22A,...,22N correspondant.

Selon l'invention, quel que soit le niveau de priorité des trames de deuxième type, celui-ci est toujours inférieur au niveau de priorité de chaque trame de premier type.

Pour transmettre les trames de types différents, selon l'invention, chaque port d'entrée de chaque commutateur 22A,...,22N est configuré pour déterminer le type de chaque trame reçue à partir de l'entête de cette trame et pour traiter cette trame conformément à son type, chaque trame de premier type étant traité en priorité par rapport à chaque trame de deuxième type.

En particulier, lorsqu'un port d'entrée de l'un des commutateurs, par exemple du commutateur 22A, détermine qu'une trame reçue est de premier type, ce commutateur 22A est apte à la traiter de manière conventionnelle pour les trames de type ARINC 664 P7.

Ce traitement comprend en particulier la mise en œuvre de chaque opération de filtrage suivante par le port d'entrée ayant reçu cette trame :
- identification de l'identifiant de la trame, c'est-à-dire de sa valeur VL, et rejet de cette trame lorsque son identifiant n'est pas attendu selon la table de configuration du commutateur 22A ;
- identification de la taille de la trame correspondante et rejet de cette trame lorsque sa taille dépasse un seuil déterminé selon la table de configuration du commutateur 22A.

Si la trame reçue n'est rejetée, le port d'entrée correspondant est configuré pour transmettre cette trame vers un ou plusieurs ports de sortie conformément à la table de configuration du commutateur 22. Cette trame est donc mise dans une file d'attente associée au(x) port(s) de sortie conformément à son niveau de priorité, tout en restant prioritaire par rapport à chaque trame de deuxième type.

Par ailleurs, le commutateur 22A est configuré également pour contrôler le respect par chaque flux de premier type des valeurs suivantes :
- bande passante de ce flux ;
- gigue ;
- cadencement minimal.

En ce qui concerne les trames de deuxième type, lorsqu'un port d'entrée de l'un des commutateurs, par exemple du commutateur 22A, détermine qu'une trame reçue est de deuxième type, selon un premier mode de réalisation de l'invention, le commutateur est apte à la traiter comme une trame de type Ethernet à routage prédéterminé, tout en considérant son niveau de priorité inférieur à chaque niveau de priorité de chaque trame de premier type.

En particulier, comme dans le cas précédent, un tel traitement comprend l'identification de l'identifiant, c'est-à-dire de la valeur Flow_ID, de la trame reçue par le port d'entrée, et la transmission de cette trame vers un ou plusieurs ports de sortie conformément à l'identifiant de cette trame et conformément à la table de configuration du commutateur 22A.

Dans le ou chaque port de sortie, cette trame est mise dans une file d'attente conformément à son type et à son niveau de priorité.

En outre, comme dans le cas précédent, l'une des opérations de filtrage précédentes peut être appliquée à cette trame par le port d'entrée correspondant.

On conçoit alors que le premier mode de réalisation de l'invention permet de mettre en œuvre une mixabilité des réseaux de types ARINC 664 P7 et Ethernet en utilisant les mêmes composantes physiques, c'est-à-dire les mêmes moyens de transmission, les mêmes commutateurs et les mêmes ports d'entrée et de sortie.

Cela permet alors de diminuer considérablement l'encombrement et le poids des réseaux 12 et 14 à bord de l'aéronef 10.

De plus, selon l'invention, le fonctionnement du réseau ARINC 664 P7 n'est sensiblement pas dégradé car le traitement des flux de ce réseau reste identique au traitement appliqué dans les réseaux classiques ARINC 664 P7 en considérant dans la conception le flux Ethernet comme un niveau supplémentaire de priorité la plus faible. Autrement dit, le système lors de l"émission est non préemptif ce qui signifie que lorsqu'une trame de deuxième type est en cours d'émission, cette émission sera finalisée et en particulier, ne sera pas interrompue en cas d'arrivée d'une trame de deuxième type. L'impact sur la performance au niveau de chaque commutateur est donc au maximum d'une trame de taille maximum. En effet, les flux de type ARINC 664 P7 restent toujours prioritaires par rapport aux flux de type Ethernet.

Les modes de réalisation décrits par la suite concernent uniquement des traitements particuliers des flux de deuxième type afin de rendre le réseau 14 plus déterministe.

En particulier, dans chacun de ces modes de réalisation, chaque équipement émetteur 24A à 24N est configuré pour émettre les trames de deuxième type d'un même flux avec un cadencement minimal défini pour ce flux et selon une bande passante définie pour ce flux.

Le cadencement minimal correspond à un intervalle minimal d'émission de deux trames consécutives d'un même flux.

La bande passante correspond au débit maximal de trames d'un même flux.

Ces cadencements et ces bandes passantes sont définis à la phase de conception du système 10 et sont mémorisés dans les tables de configuration des commutateurs 22A,...,22N correspondants avec les valeurs Flow_ID correspondantes.

Les flux de deuxième type sont ainsi dits « BAGués » dans la mesure où des propriétés similaires à celles des flux de premier type sont associées à ces flux de deuxième type.

Dans ce cas, il est donc possible de configurer chaque commutateur 22A,...,22N afin de contrôler la bande passante de chaque flux entrante et/ou sa gigue et/ou son cadencement minimal.

Ainsi, selon un deuxième mode de réalisation, la bande passante de chaque flux de deuxième type est définie indépendamment des bandes passantes des flux de premier type.

Selon ce mode de réalisation, les bandes passantes des flux de deuxième type ne sont donc pas garanties car les flux de premier type restent prioritaires par rapport aux flux de deuxième type.

Selon un troisième mode de réalisation, la bande passante de chaque flux de deuxième type est déterminée en fonction des bandes passantes des flux de premier type.

Cela signifie en particulier que la bande passante de chaque flux de deuxième type est définie comme le reste de la bande passante maximale des moyens de transmission correspondants après la soustraction des bandes passantes des flux de premier type correspondants et éventuellement prenant en compte des bandes passantes de réserve.

Selon un quatrième mode de réalisation combinable avec le deuxième ou le troisième mode de réalisation, chaque équipement émetteur 24A,...,24N est apte à définir une bande passante totale pour l'ensemble des flux de deuxième type issus de cet équipement émetteur 24A,...,24N indépendamment des autres équipements émetteurs 24A,...,24N.

Dans ce cas, chaque bande passante totale est donc définie localement. Puis, à partir de cette bande passante totale, l'équipement émetteur correspondant 24A,...,24N est apte à définir la bande passante pour chaque flux issu de cet équipement émetteur de manière équitable ou pondérée.

En particulier, dans ce dernier cas, l'équipement émetteur correspondant peut définir une bande passante pour chacun de ses flux en fonction par exemple du niveau de priorité de ce flux, de sa nature, etc.

Selon un cinquième mode de réalisation combinable avec le deuxième ou le troisième mode de réalisation, chaque équipement émetteur 24A,...,24N est apte à définir une bande passante totale pour l'ensemble des flux de deuxième type issus de cet équipement émetteur en fonction des bandes passantes totales déterminées par les autres équipements émetteurs 24A,...,24N.

Dans ce cas, une même bande passante totale, correspondant à la bande passante totale minimale parmi l'ensemble des bandes passantes totales définies par les équipements émetteurs 24A,...,24N, est attribuée à chacun des équipements émetteurs 24A,...,24N.

Puis, comme dans le cas précédent, à partir de la bande passante totale, chaque équipement émetteur définit une bande passante pour chacun de ses flux de manière équitable ou pondérée.

Finalement, selon un sixième mode de réalisation combinable avec le deuxième ou le troisième mode de réalisation, la bande passante pour chaque flux de deuxième type est déterminée de manière automatique et optimisée par exemple par un outil externe conçu à cet effet.

Cet outil attribue par exemple les bandes passantes aux flux de deuxième type en fonction de leur niveau de priorité, de leur nature, etc.

Bien entendu, d'autres modes de réalisation et notamment, différentes manières de détermination des bandes passantes des flux de deuxième type sont également possibles.

## Revendications

1. Système de communication avionique (20) comportant :
- une pluralité de commutateurs (22A,...,22N) raccordés entre eux pour former un réseau informatique ;
- une pluralité d'équipements (24A,...,24N), chaque équipement (24A,...,24N) étant émetteur et/ou récepteur de données numériques et étant raccordé à au moins un commutateur (22A,...,22N) ;
le système (20) étant tel que:
- chaque équipement émetteur (24A,...,24N) est apte à générer des données numériques se présentent sous la forme d'une pluralité de trames, chaque trame ayant un identifiant (VL, Flow_ID) et étant de premier type ou de deuxième type, les trames de premier type étant conformes à un premier protocole et les trames de deuxième type étant conformes à un deuxième protocole différent du premier protocole, les trames d'un même type ayant un même identifiant (VL ; Flow_ID) formant un flux de ce type ;
- chaque commutateur (22A,...,22N) et chaque équipement récepteur (24A,...,24N) sont configurés pour déterminer le type de chaque trame reçue et en fonction du type déterminé, pour traiter cette trame conformément au premier protocole ou conformément au deuxième protocole, chaque trame de premier type étant traitée en priorité par rapport à chaque trame de deuxième type ; et
- le premier protocole est de type ARINC 664 P7 et le deuxième protocole est de type Ethernet à routage prédéterminé.
dans lequel chaque équipement émetteur (24A,...,24N) est configuré pour émettre les trames de deuxième type d'un même flux selon une bande passante définie pour ce flux.

2. Système (20) selon la revendication 1, dans lequel chaque commutateur (22A,...,22N) est configuré pour déterminer le type de chaque trame reçue à partir d'un champ de cette trame.

3. Système (20) selon la revendication 2, dans lequel ledit champ correspond à un entête de la trame correspondante.

4. Système (20) selon la revendication 2 ou 3, dans lequel chaque commutateur (22A,...,22N) est configuré pour appliquer une opération de filtrage à chaque trame de deuxième type reçue conformément à une table de configuration prédéterminée dans ce commutateur (22A,...,22N), chaque opération de filtrage étant choisie dans le groupe d'opérations comprenant :
- identification de l'identifiant de la trame correspondante et rejet de cette trame lorsque son identifiant (Flow_ID) n'est pas attendu selon la table de configuration ;
- identification de la taille de la trame correspondante et rejet de cette trame lorsque sa taille dépasse un seuil déterminé selon la table de configuration.

5. Système (20) selon l'une quelconque des revendications précédentes, dans lequel chaque équipement émetteur (24A,...,24N) est configuré pour émettre les trames de deuxième type d'un même flux avec un cadencement minimal défini pour ce flux et correspondant à un intervalle minimal d'émission de deux trames consécutives de ce flux.

6. Système (20) selon la revendication 5, dans lequel le cadencement minimal et la bande passante sont définis pour chaque flux de deuxième type indépendamment des bandes passantes des flux de premier type ou en fonction des bandes passantes des flux de premier type.

7. Système (20) selon l'une quelconque des revendications précédentes, dans lequel chaque équipement émetteur (24A,...,24N) est apte à définir une bande passante totale pour l'ensemble des flux de deuxième type issus de cet équipement émetteur (24A,...,24N) indépendamment des autres équipements émetteurs (24A,...,24N), et à partir de cette bande passante totale, la bande passante pour chaque flux issu de cet équipement émetteur (24A,...,24N).

8. Système (20) selon l'une quelconque des revendications 1 à 6, dans lequel chaque équipement émetteur (24A,...,24N) est apte à définir une bande passante totale pour l'ensemble des flux de deuxième type issus de cet équipement émetteur (24A,...,24N) en fonction des bandes passantes totales déterminées par les autres équipements émetteurs (24A,...,24N), et à partir de cette bande passante totale, la bande passante pour chaque flux issu de cet équipement émetteur (24A,...,24N).

9. Système (20) selon la revendication 7 ou 8, dans lequel la bande passante pour chaque flux de deuxième type issu d'un équipement émetteur (24A,...,24N) est défini équitablement entre l'ensemble des flux de deuxième type issus de cet équipement émetteur (24A,...,24N) ou de manière pondérée en fonction de la nature de ce flux.

10. Système (20) selon l'une quelconque des revendications 1 à 6, dans lequel la bande passante de chaque flux de deuxième type est définie en fonction de la nature de ce flux.

11. Système (20) selon l'une quelconque des revendications 5 à 10, dans lequel chaque commutateur (22A,...,22N) est configuré pour contrôler pour chaque flux de deuxième type entrant au moins l'une des valeurs suivantes :
- bande passante de ce flux ;
- gigue ;
- cadencement minimal.

12. Système (20) selon l'une quelconque des revendications précédentes, dans lequel chaque commutateur (22A,...,22N) comprend une pluralité de ports d'entrée et une pluralité de ports de sortie et est configuré pour cheminer chaque trame de deuxième type vers un ou plusieurs ports de sortie déterminés selon l'identifiant de cette trame, de manière prédéterminée.

13. Système (20) selon la revendication 12, dans lequel chaque commutateur (22A,...,22N) est configuré pour recevoir chaque trame de deuxième type via un port d'entrée déterminé selon l'identifiant de cette trame, de manière prédéterminée.

14. Système (20) selon l'une quelconque des revendications précédentes, dans lequel un niveau de priorité est défini pour chaque trame de premier type et pour chaque trame de deuxième type, le niveau de priorité de chaque trame de deuxième type étant inférieur au niveau de priorité de chaque trame de premier type.

## Patentansprüche

1. Flugzeug-Kommunikationssystem (20) umfassend:
- eine Vielzahl von Schaltern (22A, ..., 22N), die untereinander verbunden sind, um ein Computernetzwerk zu bilden;
- eine Vielzahl von Geräten (24A, ..., 24N), wobei jedes Gerät (24A, ..., 24N) ein Sender und/oder Empfänger von digitalen Daten ist und mit mindestens einem Schalter (22A, ..., 22N) verbunden ist;
wobei das System (20) derart ist, dass:
- jedes Sendegerät (24A, ..., 24N) in der Lage ist, um digitale Daten zu erzeugen, die sich in Form einer Vielzahl von Böcken präsentieren, wobei jeder Block eine Kennung (VL, Flow_ID) aufweist und von einem ersten Typ oder einem zweiten Typ ist, wobei die Blöcke des ersten Typs einem ersten Protokoll entsprechen und die Blöcke des zweiten Typs einem zweiten Protokoll entsprechen, das sich von dem ersten Protokoll unterscheidet, wobei die Blöcke desselben Typs eine gleiche Kennung (VL; Flow_ID) aufweisen und einen Fluss dieses Typs bilden;
- jeder Schalter (22A, ...,22N) und jedes Empfangsgerät (24A, ...,24N) konfiguriert sind, um den Typ von jedem empfangenen Block zu bestimmen und abhängig von dem bestimmten Typ diesen Block gemäß dem ersten Protokoll oder gemäß dem zweiten Protokoll zu verarbeiten, wobei jeder Block des ersten Typs gegenüber jedem Block des zweiten Typs vorrangig verarbeitet wird; und
- das erste Protokoll vom Typ ARINC 664 P7 ist und das zweite Protokoll vom Typ Ethernet mit vorbestimmtem Routing ist,
wobei jedes Sendegerät (24A, ..., 24N) konfiguriert ist, um die Blöcke der zweiten Art eines gleichen Flusses gemäß einer für diesen Fluss definierten Bandbreite zu senden.

2. System (20) nach Anspruch 1, wobei jeder Schalter (22A, ..., 22N) konfiguriert ist, um den Typ von jedem empfangenen Block aus einem Feld dieses Blocks zu bestimmen.

3. System (20) nach Anspruch 2, wobei das Feld einem Header des entsprechenden Blocks entspricht.

4. System (20) nach Anspruch 2 oder 3, wobei jeder Schalter (22A, ..., 22N) konfiguriert ist, um einen Filtervorgang auf jeden empfangenen Block der zweiten Art gemäß einer vorbestimmten Konfigurationstabelle in diesem Schalter (22A, ..., 22N) anzuwenden, wobei jeder Filtervorgang aus der Gruppe von Vorgängen ausgewählt ist, umfassend:
- Identifizieren der Kennung des entsprechenden Blocks und Zurückweisen dieses Blocks, wenn seine Kennung (Flow_ID) gemäß der Konfigurationstabelle nicht erwartet wird;
- Identifizieren der Größe des entsprechenden Blocks und Zurückweisen dieses Blocks, wenn seine Größe einen Schwellenwert überschreitet, der gemäß der Konfigurationstabelle bestimmt wird.

5. System (20) nach einem der vorherigen Ansprüche, wobei jedes Sendegerät (24A, ..., 24N) konfiguriert ist, um die Blöcke des zweiten Typs eines gleichen Flusses mit einer minimalen Taktung zu senden, die für diesen Fluss definiert ist und einem minimalen Sendeintervall von zwei aufeinanderfolgenden Blöcken dieses Flusses entspricht.

6. System (20) nach Anspruch 5, wobei die minimale Taktung und die Bandbreite für jeden Fluss Strom des zweiten Typs unabhängig von den Bandbreiten der Flüsse des ersten Typs oder abhängig von den Bandbreiten der Flüsse des ersten Typs definiert werden.

7. System (20) nach einem der vorherigen Ansprüche, wobei jedes Sendegerät (24A, ...,24N) in der Lage ist, eine Gesamtbandbreite für alle Flüsse des zweiten Typs, die von diesem Sendegerät (24A, ...,24N) ausgehen, unabhängig von den anderen Sendegeräten (24A, ...,24N) und anhand dieser Gesamtbandbreite die Bandbreite für jeden Fluss, der von dieser Sendeeinrichtung (24A, ...,24N) ausgeht, zu definieren.

8. System (20) nach einem der Ansprüche 1 bis 6, wobei jedes Sendegerät (24A, ...,24N) in der Lage ist, eine Gesamtbandbreite für alle Flüsse des zweiten Typs, die von diesem Sendegerät (24A, ...,24N) ausgehen, abhängig von den von den anderen Sendegeräten (24A, ..., 24N) bestimmten Gesamtbandbreiten und anhand dieser Gesamtbandbreite die Bandbreite für jeden Fluss, der von dieser Sendeeinrichtung (24A, ...,24N) ausgeht, zu definieren.

9. System (20) nach Anspruch 7 oder 8, wobei die Bandbreite für jeden Fluss des zweiten Typs, der von einem Sendegerät (24A, ..., 24N) ausgeht, gleichmäßig zwischen allen Flüssen des zweiten Typs, die von diesem Sendegerät (24A, ..., 24N) ausgehen, oder gewichtet nach dem Typ dieses Flusses definiert wird.

10. System (20) nach einem der Ansprüche 1 bis 6, wobei die Bandbreite von jedem Fluss des zweiten Typs abhängig von der Art dieses Flusses definiert wird.

11. System (20) nach einem der Ansprüche 5 bis 10, wobei jeder Schalter (22A, ..., 22N) konfiguriert ist, um für jeden eingehenden Fluss des zweiten Typs mindestens einen der folgenden Werte zu steuern:
- Bandbreite dieses Flusses;
- Jitter;
- minimale Taktung.

12. System (20) nach einem der vorherigen Ansprüche, wobei jeder Schalter (22A, ..., 22N) eine Vielzahl von Eingangsanschlüssen und eine Vielzahl von Ausgangsanschlüssen umfasst und konfiguriert ist, um jeden Block des zweiten Typs auf vorbestimmte Weise zu einem oder mehreren Ausgangsanschlüssen zu leiten, die entsprechend der Kennung dieses Blocks bestimmt werden.

13. System (20) nach Anspruch 12, wobei jeder Schalter (22A, ..., 22N) konfiguriert ist, um jeden Block des zweiten Typs über einen Eingangsanschluss zu empfangen, der entsprechend der Kennung dieses Blocks auf vorbestimmte Weise bestimmt wird.

14. System (20) nach einem der vorherigen Ansprüche, wobei für jeden Block des ersten Typs und für jeden Block des zweiten Typs ein Prioritätsniveau definiert wird, wobei das Prioritätsniveau jedes jeden Block des zweiten Typs niedriger ist als das Prioritätsniveau von jedem Block des ersten Typs.

## Claims

1. An avionic communication system (20) comprising:
- a plurality of switches (22A,..., 22N) connected to each other in order to form a computer network;
- a plurality of equipment units (24A,..., 24N), each equipment unit (24A,..., 24N) being a transmitter and/or receiver of digital data and being connected to at least one switch (22A,..., 22N);
the system (20) being such that:
- each transmitting equipment unit (24A,..., 24N) is capable of generating digital data that are present in the form of a plurality of frames, each frame having an identifier (VL, Flow_ID ) and being of a first type or of a second type, the frames of the first type being in compliance with a first protocol and the frames of the second type being in compliance with a second protocol which is different from the first protocol, the frames of a same type having the same identifier (VL; Flow_ID) forming a data flow of this type;
- each switch (22A,..., 22N) and each receiving equipment unit (24A,..., 24N) are configured so as to determine the type of each frame received and, based on the determined type, to process this frame in accordance with the first protocol or in accordance with the second protocol, each frame of the first type being processed on a prioritised basis in relation to each frame of the second type; and
- the first protocol is of the type ARINC 664 P7 and the second protocol is of the type Ethernet with predetermined routing,
wherein each transmitting equipment unit (24A,..., 24N) is configured so as to transmit the frames of the second type included in the same data flow according to a bandwidth defined for this data flow.

2. A system (20) according to claim 1, wherein each switch (22A,..., 22N) is configured so as to determine the type of each frame received based on a field of this frame.

3. A system (20) according to claim 2, wherein the said field corresponds to a header of the corresponding frame.

4. A system (20) according to claim 2 or 3, wherein each switch (22A,..., 22N) is configured so as to apply a filtering operation to each frame of the second type received in accordance with a predetermined configuration table within this switch (22A, ..., 22N), each filtering operation being selected from the group of operations comprising:
- identification of the identifier of the corresponding frame and rejection of this frame when its identifier (Flow_ID) is not expected according to the configuration table ;
- identification of the size of the corresponding frame and rejection of this frame when its size exceeds a threshold value determined according to the configuration table.

5. A system (20) according to any one of the preceding claims, wherein each transmitting equipment unit (24A,..., 24N) is configured so as to transmit the frames of the second type included in the same data flow with a minimum time delay between frames defined for this data flow and corresponding to a minimum interval of transmission of two consecutive frames of this data flow.

6. A system (20) according to claim 5, wherein the minimum time delay between frames and the bandwidth are defined for each data flow of the second type independently of the bandwidths for the data flows of the first type or as a function of the bandwidths for the data flows of the first type.

7. A system (20) according to any one of the preceding claims, wherein each transmitting equipment unit (24A,..., 24N) is capable of defining a total bandwidth for all of the second type data flows originating from this transmitting equipment unit (24A,..., 24N) independently of the other transmitting equipment units (24A,..., 24N), and from this overall bandwidth, the bandwidth for each data flow originating from this transmitting equipment unit (24A,..., 24N).

8. A system (20) according to any one of claims 1 to 6, wherein each transmitting equipment unit (24A,..., 24N) is capable of defining a total bandwidth for all of the second type data flows originating from this transmitting equipment unit (24A,..., 24N) as a function of the total bandwidths determined by the other transmitting equipment units (24A,..., 24N), and based on this total bandwidth, the bandwidth for each data flow originating from this transmitting equipment unit (24A,..., 24N).

9. A system (20) according to claim 7 or 8, wherein the bandwidth for each second type data flow originating from a transmitting equipment unit (24A,..., 24N) is defined equitably between all of the second type data flows originating from this transmitting equipment unit (24A,..., 24N) or in a weighted manner as a function of the nature of this data flow.

10. A system (20) according to any one of claims 1 to 6, wherein the bandwidth for each second type data flow is defined as a function of the nature of this data flow.

11. A system (20) according to any one of claims 5 to 10, wherein each switch (22A,..., 22N) is configured so as to control for each incoming data flow of the second type at least one of the following values:
- bandwidth for this data flow;
- jitter;
- minimum time delay between frames.

12. A system (20) according to any one of the preceding claims, wherein each switch (22A,..., 22N) comprises a plurality of input ports and a plurality of output ports and is configured so as to route each frame of the second type to one or more output ports determined according to the identifier of this frame, in a predetermined manner.

13. A system (20) according to claim 12, wherein each switch (22A,..., 22N) is configured so as to receive each frame of the second type via an input port determined according to the identifier of this frame, in a predetermined manner.

14. A system (20) according to any one of the preceding claims, wherein a priority level is defined for each frame of the first type and for each frame of the second type, the priority level of each frame of the second type being lower than the priority level of each frame of the first type.
